# FASCICULE DE BREVET EUROPEEN

(11) **EP 2 825 790 B1**
(45) Date de publication et mention de la délivrance du brevet: **08.05.2019**
(21) Numéro de dépôt: 13709371.2
(22) Date de dépôt: 05.03.2013
(51) Int. Cl.: F16H 57/04, B61C 9/50, B61F 3/04

(54) **DISPOSITIF D'ENTRAÎNEMENT, NOTAMMENT POUR UN VÉHICULE FERROVIAIRE, COMPORTANT UN SYSTÈME DE REFROIDISSEMENT**
ANTRIEBSVORRICHTUNG, INSBESONDERE FÜR EIN SCHIENENFAHRZEUG, MIT EINEM KÜHLSYSTEM
DRIVE DEVICE, NOTABLY FOR A RAILWAY VEHICLE, COMPRISING A COOLING SYSTEM

(30) Priorité: 13.03.2012 FR 1252235
(43) Date de publication de la demande: 21.01.2015
(73) Titulaire: ALSTOM Transport Technologies, 93400 Saint-Ouen (FR)
(72) Inventeur: MILLIEN, Frédéric, F-17290 Forges (FR); SARDOU, Max, F-77165 Saint-Soupplets (FR); LOISEAU, Jean-Christophe, F-71200 Le Creusot (FR)
(74) Mandataire: Lavoix
(86) Numéro de dépôt international: PCT/EP2013/054402
(87) Numéro de publication internationale: WO 2013/135531

(56) Documents cités:
- EP-A1- 0 085 022
- EP-A1- 0 552 446
- FR-A- 869 260
- FR-A- 1 310 469
- JP-A- 64 058 865

## Description

La présente invention concerne un dispositif d'entraînement pour un véhicule, notamment pour un véhicule ferroviaire.

Un tel dispositif d'entraînement comporte un moteur, par exemple un moteur électrique, alimenté par des moyens classiques d'alimentation en énergie électrique, et comportant notamment un arbre d'entraînement.

Le dispositif comporte par ailleurs un réducteur, comprenant un arbre d'entrée entraîné par l'arbre d'entraînement, un arbre de sortie destiné à entraîner des roues du véhicule, et des engrenages de réduction agencés cinématiquement entre les arbres d'entrée et de sortie.

La liaison entre l'arbre d'entraînement du moteur et l'arbre d'entrée du réducteur est généralement réalisée par l'intermédiaire d'un ensemble d'accouplement, par exemple par un cardan de type classique.

Certains éléments du réducteur, notamment les engrenages destinés à de fortes réductions de vitesse, sont généralement soumis à de hautes températures qui peuvent nuire à leurs durées de vie. On prévoit habituellement de refroidir le réducteur pour limiter la surchauffe de ces éléments.

A cet effet, une solution connue consiste à refroidir le réducteur au moyen d'un flux d'air circulant autour dudit réducteur, ce flux d'air étant généré par le mouvement longitudinal du véhicule. Toutefois, cette solution n'est parfois pas satisfaisante, notamment lorsque l'espace autour du réducteur est réduit, par exemple dans le cas d'un tramway à plancher bas.

Un espace réduit autour du réducteur empêche également l'utilisation de ventilateurs dont les moyens d'alimentation sont généralement encombrants.

En tout état de cause, le refroidissement des composants de chaîne cinématique, en particulier les moteurs et réducteurs, est de plus en plus difficile de par leur intégration de plus en plus exigüe. En outre, le réducteur chauffe d'autant plus s'il fait également renvoi d'angle et si il n'a qu'un seul étage de réduction.

Le document EP0085022A1 divulgue un dispositif selon le préambule de la revendication 1.

L'invention a notamment pour but de remédier à ces inconvénients, en fournissant un dispositif d'entraînement dont le réducteur est propre à être refroidi de manière efficace, et ce même dans un espace réduit.

A cet effet, l'invention a notamment pour objet un dispositif d'entraînement pour véhicule, notamment pour véhicule ferroviaire, du type comportant un moteur, comprenant un arbre d'entraînement, et un réducteur, comprenant un arbre d'entrée lié en rotation avec l'arbre d'entraînement, caractérisé en ce qu'il comporte au moins un ventilateur, comprenant une hélice propre à être entraînée en rotation autour de son axe par l'arbre d'entraînement et propre à générer un flux d'air destiné à être orienté en direction du réducteur, le ventilateur étant propre à générer un flux d'air dans une même direction quel que soit le sens de rotation de son hélice.

Un tel ventilateur forme un système de refroidissement ne nécessitant pas de moyens d'alimentation spécifiques encombrants, puisque son hélice est entraînée en rotation par l'ensemble d'accouplement, donc par le moteur.

Par ailleurs, la vitesse de rotation de l'hélice, donc la puissance du flux d'air généré, augmente automatiquement en fonction des besoins de refroidissement des engrenages du réducteur. En effet, alors que la chaleur générée dans ces engrenages augmente avec la vitesse de rotation de l'arbre d'entraînement, le flux d'air généré augmente avec la vitesse de rotation de l'hélice, directement lié à la vitesse de rotation de l'arbre d'entraînement.

De préférence, le dispositif d'entraînement selon l'invention comporte l'une ou plusieurs des caractéristiques suivantes, prises seules ou selon toutes les combinaisons techniquement envisageables.
- Le dispositif d'entraînement comporte un ensemble d'accouplement, accouplant l'arbre d'entraînement avec l'arbre d'entrée du réducteur, l'hélice étant liée en rotation avec cet ensemble d'accouplement.
- L'ensemble d'accouplement forme un cardan, comportant un premier élément de cardan, solidaire de l'arbre d'entraînement, un second élément de cardan, solidaire de l'arbre d'entrée du réducteur, et un élément intermédiaire reliant les premier et second éléments de cardan.
- L'hélice est solidaire du premier élément de cardan, et coaxiale avec l'arbre d'entraînement.
- L'hélice est solidaire du second élément de cardan, et coaxiale avec l'arbre d'entrée.
- L'hélice est solidaire de l'élément intermédiaire de l'ensemble d'accouplement.
- Le ventilateur comporte une tuyère de guidage du flux d'air généré par l'hélice, propre à guider ce flux d'air en direction du réducteur.
- L'hélice comporte un moyeu portant des pales à effet radial, destinées à générer un flux d'air radial lorsque le moyeu est en rotation, chaque pale à effet radial étant symétrique par rapport à un plan médian de cette pale, passant par l'axe du moyeu, et une jupe de déviation du flux d'air radial vers une direction sensiblement parallèle à l'axe du moyeu.
- L'hélice comporte un moyeu portant des pales à effet axial, chaque pale à effet axial étant symétrique par rapport à un plan médian de cette pale, passant par l'axe du moyeu.
- L'hélice comporte un moyeu portant des pales à effet axial et radial, chaque pale étant symétrique par rapport à un plan médian de cette pale, passant par l'axe du moyeu.

L'invention a également pour objet un véhicule, notamment un véhicule ferroviaire, par exemple un tramway à plancher bas, comprenant un dispositif d'entraînement tel que défini précédemment.

En effet, un tel dispositif d'entraînement est particulièrement adapté à un tramway à plancher bas, pour lequel l'espace autour du réducteur est particulièrement réduit.

L'invention sera mieux comprise à la lecture de la description qui va suivre, donnée uniquement à titre d'exemple et faite en se référant aux figures annexées parmi lesquelles :
- la figure 1 est une vue en coupe d'un dispositif d'entraînement selon un exemple de mode de réalisation de l'invention, dont le ventilateur est représenté partiellement ;
- la figure 2 est une vue de côté du dispositif d'entraînement de la figure 1, dont le ventilateur est entièrement représenté ;
- la figure 3 est une vue en perspective de l'hélice du ventilateur équipant le dispositif d'entraînement de la figure 1 ;
- la figure 4 est une vue en perspective d'un organe de guidage de flux d'air équipant le ventilateur du dispositif d'entraînement de la figure 2.

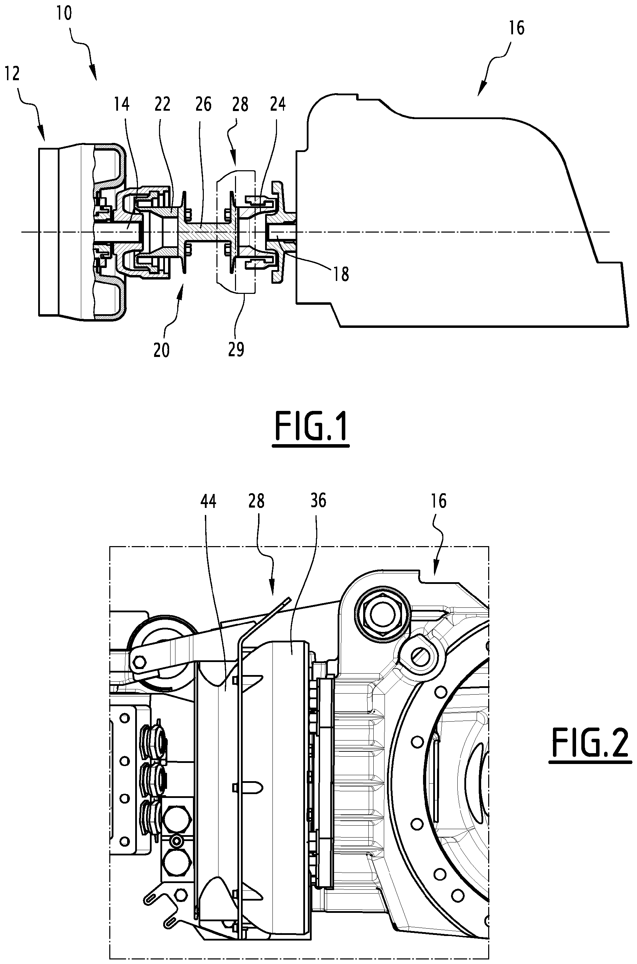

On a représenté, sur la figure 1, un dispositif d'entraînement 10 destiné à équiper un véhicule, notamment un véhicule ferroviaire, afin de participer à l'entraînement de ce véhicule en mouvement. Ce dispositif d'entraînement 10 est par exemple destiné à équiper un bogie moteur d'un tramway à plancher bas.

Le dispositif d'entraînement 10 comporte un moteur 12, par exemple un moteur électrique alimenté par des moyens classiques d'alimentation en énergie électrique, tels qu'une caténaire, un rail d'alimentation ou tout autre moyen envisageable. Ce moteur électrique 12, qui est classique et ne sera pas décrit plus en détail, comporte notamment un arbre d'entraînement 14.

Le dispositif d'entraînement 10 comporte par ailleurs un réducteur 16. Ce réducteur 16, qui est classique et ne sera pas décrit en détail, comprend notamment un arbre d'entrée 18 entraîné en rotation par l'arbre d'entraînement 14 du moteur 12. Un réducteur 16 comporte également un arbre de sortie (non représenté), destiné à entraîner des roues du véhicule. Le réducteur 16 comporte classiquement des engrenages de réduction (non représentés) agencés cinématiquement entre les arbres d'entrée 18 et de sortie.

L'arbre d'entraînement 14 du moteur 12 et l'arbre d'entrée 18 du réducteur 16 sont couplés au moyen d'un ensemble d'accouplement 20.

Dans l'exemple représenté, l'ensemble d'accouplement 20 est formé par un cardan. On rappelle qu'un cardan permet de coupler deux arbres concourants, même si leurs axes ne sont pas alignés.

Cet ensemble d'accouplement 20 comporte un premier élément de cardan 22, solidaire de l'arbre d'entraînement 14, un second élément de cardan 24, solidaire de l'arbre d'entrée 18 du réducteur 16, et un élément intermédiaire de cardan 26 reliant les premier 22 et second 24 éléments de cardan.

En variante, l'arbre d'entraînement 14 et l'arbre d'entrée 18 pourraient être couplés par tout autre type d'ensemble d'accouplement envisageable.

Le dispositif d'entraînement 10 comporte des moyens de refroidissement du réducteur 16, permettant de limiter la chaleur générée dans les engrenages du réducteur 16, et ainsi prolonger leur durée de vie.

Ces moyens de refroidissement comportent un ventilateur 28.

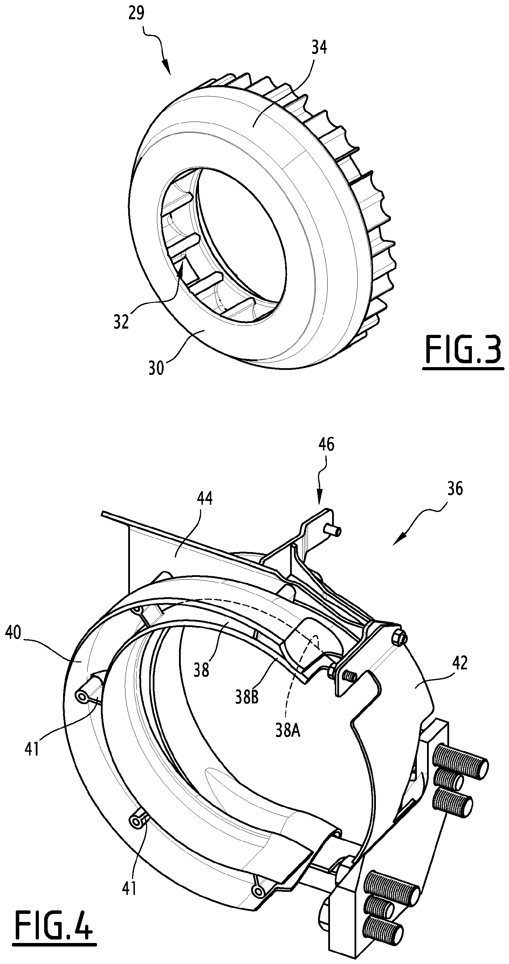

Le ventilateur 28 comporte une hélice 29, visible sur la figure 1, et représentée plus en détail sur la figure 3. L'hélice 29 comprend un moyeu 30, portant des pales 32 rotatives autour de l'axe du moyeu 30, propres à générer un flux d'air destiné à être orienté en direction du réducteur 16 afin de refroidir les engrenages qu'elle comporte.

Le moyeu 30 est lié en rotation avec l'ensemble d'accouplement 20. En particulier, dans l'exemple représenté sur la figure 1, le moyeu 30 est solidaire du second élément de cardan 24, et coaxial avec l'arbre d'entrée 18. A cet effet, le moyeu 30 est fixé par vissage sur le second élément de cardan 24.

En variante, le moyeu 30 pourrait être solidaire du premier élément de cardan 22 et coaxial avec l'arbre d'entraînement 14. Conformément à une autre variante, le moyeu 30 pourrait être solidaire de l'élément intermédiaire 26 du cardan 20.

Dans tous les cas, le moyeu 30 est entraîné en rotation par l'arbre d'entraînement 14. Ainsi, le ventilateur 28 ne nécessite pas de source d'alimentation supplémentaire, et sa vitesse de rotation dépend directement de celle de l'arbre d'entraînement 14.

Par ailleurs, l'agencement du ventilateur 28 sur l'ensemble d'accouplement 20 permet de limiter l'encombrement du ventilateur 28. En effet, cet encombrement n'est limité que par le diamètre du ventilateur 28, généralement inférieur aux dimensions radiales du réducteur 16.

Selon l'invention, le ventilateur 28 est propre à générer un flux d'air dans une même direction quel que soit le sens de rotation du moyeu 30 de son hélice 29. Un tel ventilateur permet de diriger le flux d'air vers le réducteur 16 quel que soit le sens de rotation du moyeu 30.

En effet, un véhicule ferroviaire, notamment un tramway, est généralement susceptible de se déplacer dans deux directions opposées. Ainsi, le moteur 12, et l'arbre d'entraînement 14, sont susceptibles de tourner dans les deux sens. Or, le flux d'air généré par le ventilateur 28 est destiné à refroidir le réducteur 16, et il est donc important que ce flux d'air reste dirigé vers ce réducteur 16.

A cet effet, l'hélice 29 comporte des pales 32 à effet radial, destinées à générer un flux d'air radial lorsque le moyeu 30 est en rotation. De préférence, chaque pale 32 de l'hélice 29 est symétrique par rapport à un plan médian de cette pale, passant par l'axe du moyeu 30.

Un tel flux radial ne dépend pas du sens de rotation du moyeu 30. Dans ce cas, l'hélice 29 comporte avantageusement une jupe 34, de préférence venue de matière avec le moyeu 30, agencée coaxialement autour des pales 32 à effet radial. Une telle jupe 34 permet de dévier le flux d'air radial vers une direction sensiblement parallèle à l'axe du moyeu 30, vers le réducteur 16.

De préférence, le ventilateur 28 comporte en outre un organe 36 de guidage du flux d'air généré, propre à guider ce flux d'air en sortie de l'hélice 29, en direction du réducteur 16. Comme cela est représenté sur la figure 2, cet organe de guidage 36 est agencé autour de l'hélice 29, coaxialement à cette hélice 29.

L'organe de guidage 36 est représenté plus en détail sur la figure 4.

L'organe de guidage 36 comporte une tuyère intérieure 38 et une tuyère extérieure 40, de formes générales de révolution et coaxiales, la tuyère extérieure 40 étant plus longue axialement que la tuyère intérieure 38. La tuyère intérieure 38 est logée dans un espace délimité par la tuyère extérieure 40, les tuyères 38, 40 étant reliés au moyen de pattes radiales 41.

Chaque tuyère 38, 40 présente avantageusement une partie avant, dont le rayon augmente, permettant de dévier un flux d'air radial vers une direction axiale, et une partie arrière, de rayon constant, pour le guidage axial du flux d'air dévié.

La tuyère intérieure 38 s'étend entre un bord avant 38A et un bord arrière 38B, le bord avant 38A étant avantageusement agencé au-dessus des pales 32 à effet radial lorsque l'organe de guidage 36 est monté autour de l'hélice 29. Ainsi, une partie du flux d'air généré par les pales 32 est guidé entre la jupe 34 et la tuyère intérieure 38, et une autre partie du flux d'air est guidé entre les tuyères intérieure 38 et extérieure 40. Un tel organe de guidage 36 présente donc deux étages de guidage, ce qui permet d'améliorer la linéarité du flux d'air en sortie de l'organe de guidage 36.

Conformément à l'exemple représenté, les tuyères intérieure 38 et extérieure 40 sont tronquées angulairement, et refermés par une plaque 42, par exemple en tôle, dont le rayon de courbure est supérieur à ceux des tuyères 38 et 40. Cette plaque 42 permet de réduire en partie l'encombrement de l'organe de guidage 36.

L'organe de guidage 36 comporte enfin une partie de fixation 44, par exemple en tôle, fixée aux tuyères 38, 40 et à la plaque 42, par exemple par vissage, et comportant des moyens de fixation 46 dans le dispositif 10, par exemple sur le moteur 12 ou sur le réducteur 16.

On notera que l'invention n'est pas limitée aux modes de réalisation précédemment décrits, elle pourrait comporter diverses variantes sans sortir du cadre des revendications.

En particulier, l'hélice 29 peut comporter des pales à effet axial, destinées à générer un flux d'air axial lorsque le moyeu 30 est en rotation. Dans ce cas, chaque pale de l'hélice 29 est symétrique par rapport à un plan médian de cette pale, passant par l'axe du moyeu 30. Une telle forme est nécessaire pour que la direction du flux d'air soit indépendante du sens de rotation du moyeu 30.

Il est également possible de prévoir un ventilateur combinant des pales à effet radial et des pales à effet axial, ou comportant des pales à effet radial et axial. Un tel ventilateur comporte des moyens pour combiner les flux d'air radial et axial en un unique flux d'air axial global dirigé vers le réducteur 16.

## Revendications

1. Dispositif d'entraînement (10) pour véhicule, notamment pour véhicule ferroviaire, du type comportant un moteur (12), comprenant un arbre d'entraînement (14), et un réducteur (16), comprenant un arbre d'entrée (18) lié en rotation avec l'arbre d'entraînement, et comportant au moins un ventilateur (28), comprenant une hélice (29) propre à être entraînée en rotation autour de son axe par l'arbre d'entraînement (14), et propre à générer un flux d'air destiné à être orienté en direction du réducteur (16), **caractérisé en ce que** le ventilateur (28) est propre à générer un flux d'air dans une même direction quel que soit le sens de rotation de son hélice (29).

2. Dispositif d'entraînement (10) selon la revendication 1, comportant un ensemble d'accouplement (20), accouplant l'arbre d'entraînement (14) avec l'arbre d'entrée (18) du réducteur, l'hélice (29) étant liée en rotation avec cet ensemble d'accouplement (20).

3. Dispositif d'entraînement (10) selon la revendication 2, dans lequel l'ensemble d'accouplement (20) forme un cardan, comportant un premier élément de cardan (22), solidaire de l'arbre d'entraînement (14), un second élément de cardan (24), solidaire de l'arbre d'entrée (18) du réducteur, et un élément intermédiaire (26) reliant les premier (22) et second (24) éléments de cardan.

4. Dispositif d'entraînement (10) selon la revendication 3, dans lequel l'hélice (29) est solidaire du premier élément de cardan (22), et coaxiale avec l'arbre d'entraînement (14).

5. Dispositif d'entraînement (10) selon la revendication 3, dans lequel l'hélice (29) est solidaire du second élément de cardan (24), et coaxiale avec l'arbre d'entrée (18).

6. Dispositif d'entraînement (10) selon la revendication 3, dans lequel l'hélice (29) est solidaire de l'élément intermédiaire (26) de l'ensemble d'accouplement (20).

7. Dispositif d'entraînement (10) selon l'une quelconque des revendications précédentes, dans lequel le ventilateur (28) comporte une tuyère (36) de guidage du flux d'air généré par l'hélice (29), propre à guider ce flux d'air en direction du réducteur (16).

8. Dispositif d'entraînement (10) selon l'une quelconque des revendications précédentes, dans lequel l'hélice (29) comporte:
- un moyeu (30) portant des pales (32) à effet radial, destinées à générer un flux d'air radial lorsque le moyeu (30) est en rotation, chaque pale (32) à effet radial étant symétrique par rapport à un plan médian de cette pale, passant par l'axe du moyeu (30), et
- une jupe (34) de déviation du flux d'air radial vers une direction sensiblement parallèle à l'axe du moyeu (30).

9. Dispositif d'entraînement (10) selon l'une quelconque des revendications précédentes, dans lequel l'hélice (29) comporte un moyeu (30) portant des pales à effet axial, chaque pale à effet axial étant symétrique par rapport à un plan médian de cette pale, passant par l'axe du moyeu (30).

10. Dispositif d'entraînement (10) selon l'une quelconque des revendications précédentes, dans lequel l'hélice (29) comporte un moyeu (30) portant des pales à effet axial et radial, chaque pale étant symétrique par rapport à un plan médian de cette pale, passant par l'axe du moyeu (30).

11. Véhicule, notamment ferroviaire, par exemple un tramway à plancher bas, **caractérisé en ce qu'**il comporte un dispositif d'entraînement (10) selon l'une quelconque des revendications 1 à 10.

## Patentansprüche

1. Antriebs-Vorrichtung (10) für ein Fahrzeug, insbesondere für ein Schienenfahrzeug, des Typs aufweisend einen Motor (12), der eine Antriebswelle (14) aufweist, und ein Getriebe (16), das eine Eingangswelle (18) aufweist, die mit der Antriebswelle drehverbunden ist, und aufweisend wenigstens einen Lüfter (28), der einen Propeller (29) aufweist, der imstande ist, von der Antriebswelle (14) um seine Achse drehangetrieben zu werden, und der imstande ist, eine Luftströmung zu generieren, die dazu bestimmt ist, in Richtung des Getriebes (16) gerichtet zu sein, **dadurch gekennzeichnet, dass**
der Lüfter (28) imstande ist, eine Luftströmung in einer gleichen Richtung zu generieren unabhängig von der Drehrichtung seines Propellers (29).

2. Antriebs-Vorrichtung (10) gemäß Anspruch 1, aufweisend eine Kupplungs-Einrichtung (20), welche die Antriebswelle (14) mit der Eingangswelle (18) des Getriebes kuppelt, wobei der Propeller (29) mit dieser Kupplungs-Einrichtung (20) drehverbunden ist.

3. Antriebs-Vorrichtung (10) gemäß Anspruch 2, wobei die Kupplungs-Einrichtung (20) eine Kardanlagerung bildet, mit einem ersten Kardanelement (22), das mit der Antriebswelle (14) fest verbunden ist, einem zweiten Kardanelement (24), das mit der Eingangswelle (18) des Getriebes fest verbunden ist, und einem Zwischenelement (26), das das erste (22) und das zweite (24) Kardanelement verbindet.

4. Antriebs-Vorrichtung (10) gemäß Anspruch 3, wobei der Propeller (29) fest mit dem ersten Kardanelement (22) verbunden und koaxial zu der Antriebswelle (14) ist.

5. Antriebs-Vorrichtung (10) gemäß Anspruch 3, wobei der Propeller (29) fest mit dem zweiten Kardanelement (24) verbunden und koaxial zu der Eingangswelle (18) ist.

6. Antriebs-Vorrichtung (10) gemäß Anspruch 3, wobei der Propeller (29) fest mit dem Zwischenelement (26) der Kupplungs-Einrichtung (20) verbunden ist.

7. Antriebs-Vorrichtung (10) gemäß irgendeinem der vorhergehenden Ansprüche, wobei der Lüfter (28) eine Düse (36) zum Führen des von dem Propeller (29) generierten Luftstroms aufweist, die imstande ist, diesen Luftstrom in Richtung des Getriebes (16) zu führen.

8. Antriebs-Vorrichtung (10) gemäß irgendeinem der vorhergehenden Ansprüche, wobei der Propeller (29) aufweist:
- eine Nabe (30), die Blätter (32) mit Radialwirkung trägt, die dazu bestimmt sind, eine radiale Luftströmung zu generieren, wenn sich die Nabe (30) dreht, wobei jedes Blatt (32) mit Radialwirkung bezüglich einer Mittelebene dieses Blatts symmetrisch ist, die von der Achse der Nabe (30) passiert wird, und
- einen Rock (34) zur Ableitung der radialen Luftströmung in eine Richtung im Wesentlichen parallel zu der Blattachse (30).

9. Antriebs-Vorrichtung (10) gemäß irgendeinem der vorhergehenden Ansprüche, wobei der Propeller (29) eine Nabe (30) aufweist, die Blätter mit Radialwirkung trägt, wobei jedes Blatt mit Radialwirkung symmetrisch ist bezüglich einer Mittelebene dieses Blatt, die von der Achse der Nabe (30) passiert wird.

10. Antriebs-Vorrichtung (10) gemäß irgendeinem der vorhergehenden Ansprüche, wobei der Propeller (29) eine Nabe (30) aufweist, die Blätter mit Axial- und Radialwirkung aufweist, wobei jedes Blatt symmetrisch ist bezüglich einer Mittelebene dieses Blatts, die von der Achse der Nabe (20) passiert wird.

11. Fahrzeug, insbesondere schienengebunden, wie z.B. eine Niederflur-Straßenbahn, **dadurch gekennzeichnet, dass** es aufweist einen Antriebs-Vorrichtung (10) gemäß irgendeinem der Ansprüche 1 bis 10.

## Claims

1. Drive device (10) for a vehicle, especially for a railway vehicle, of the type having a motor (12), comprising a drive shaft (14), and a reduction gear (16), comprising an input shaft (18) connected in rotation to the drive shaft, and having at least one fan (28), comprising a rotor (29) capable of being driven in rotation about its axis by the drive shaft (14), and capable of generating a flow of air which is to be oriented in the direction towards the reduction gear (16), **characterised in that** the fan (28) is capable of generating a flow of air in the same direction whatever the direction of rotation of its rotor (29).

2. Drive device (10) according to claim 1, having a coupling assembly (20) which couples the drive shaft (14) with the input shaft (18) of the reduction gear, the rotor (29) being connected in rotation to the coupling assembly (20).

3. Drive device (10) according to claim 2, wherein the coupling assembly (20) forms a universal joint having a first universal joint element (22), integral with the drive shaft (14), a second universal joint element (24), integral with the input shaft (18) of the reduction gear, and an intermediate element (26) connecting the first (22) and second (24) universal joint elements.

4. Drive device (10) according to claim 3, wherein the rotor (29) is integral with the first universal joint element (22) and coaxial with the drive shaft (14).

5. Drive device (10) according to claim 3, wherein the rotor (29) is integral with the second universal joint element (24) and coaxial with the input shaft (18).

6. Drive device (10) according to claim 3, wherein the rotor (29) is integral with the intermediate element (26) of the coupling assembly (20).

7. Drive device (10) according to any one of the preceding claims, wherein the fan (28) has a nozzle (36) for guiding the flow of air generated by the rotor (29), capable of guiding the flow of air in the direction towards the reduction gear (16).

8. Drive device (10) according to any one of the preceding claims, wherein the rotor (29) comprises:
- a hub (30) carrying blades (32) having a radial effect for generating a radial flow of air when the hub (30) is rotating, each blade (32) having a radial effect being symmetrical relative to a mid-plane of that blade passing through the axis of the hub (30), and
- a skirt (34) for deflecting the radial flow of air in a direction substantially parallel to the axis of the hub (30).

9. Drive device (10) according to any one of the preceding claims, wherein the rotor (29) has a hub (30) carrying blades having an axial effect, each blade having an axial effect being symmetrical relative to a mid-plane of that blade passing through the axis of the hub (30).

10. Drive device (10) according to any one of the preceding claims, wherein the rotor (29) has a hub (30) carrying blades having an axial and radial effect, each blade being symmetrical relative to a mid-plane of that blade passing through the axis of the hub (30).

11. Vehicle, especially railway vehicle, for example a low-floor tram, **characterised in that** it has a drive device (10) according to any one of claims 1 to 10.
